# EUROPEAN PATENT APPLICATION

(11) **EP 4 746 249 A1**
(43) Date of publication of application: **20.05.2026**
(21) Application number: 24843546.3
(22) Date of filing: 19.07.2024
(51) Int. Cl.: H02J 50/60, H02J 50/80, H02J 50/90, H02J 50/12

(54) **WIRELESS POWER TRANSMISSION DEVICE, METHOD FOR OPERATING WIRELESS POWER TRANSMISSION DEVICE, AND NON-TRANSITORY STORAGE MEDIUM**

(30) Priority: 19.07.2023 KR 20230093811; 19.10.2023 KR 20230140537
(71) Applicant: Samsung Electronics Co., Ltd., Suwon-si, Gyeonggi-do 16677 (KR)
(72) Inventor: KIM, Yusu, Suwon-si, Gyeonggi-do 16677 (KR); KO, Minbeom, Suwon-si, Gyeonggi-do 16677 (KR); GU, Beomwoo, Suwon-si, Gyeonggi-do 16677 (KR); KIM, Joonhong, Suwon-si, Gyeonggi-do 16677 (KR); PARK, Bumjin, Suwon-si, Gyeonggi-do 16677 (KR); BYUN, Kangho, Suwon-si, Gyeonggi-do 16677 (KR)
(74) Representative: Gulde & Partner
(86) International application number: PCT/KR2024/010444
(87) International publication number: WO 2025/018832

(57) **Abstract**

The present disclosure relates to a wireless power transmission device, a method for operating the wireless power transmission device, and a non-transitory storage medium. According to an embodiment, a controller of a wireless power transmission device may be configured to: control a power supply circuit to apply first power to a transmitting coil in a first ping operation; detect first information related to the first ping operation while performing the first ping operation and store the first information in a memory; identify an external object placed in a charging area of a housing of the wireless power transmission device on the basis of the first information and reference information; detect second information related to the first ping operation by re-performing the first ping operation, identify movement of the external object on the basis of a difference between the first information and the second information; control the power supply circuit to apply second power for communication with the object to the transmission coil in a second ping operation; and on the basis of identifying that a response is received from the object while performing the second ping operation, perform an operation for foreign object detection (FOD) and an operation for transmitting power for wireless charging to the external object. Other embodiments are also possible.

## Description

### [Technical Field]

Embodiments of the disclosure relate to a wireless power transmission device for detecting a foreign object, a method for operating the wireless power transmission device, and a non-transitory storage medium.

### [Background Art]

Wireless power transfer technology using magnetic induction is a method of transferring power by using an electromagnetic field induced in a coil, and a wireless power transmission device applies a current to a transmission coil to generate an electromagnetic field, and an induced electromotive force is formed in a reception coil of the wireless power reception device by the generated electromagnetic field, so that power may be transmitted wirelessly.

The wireless power reception device may receive power wirelessly from the wireless power transmission device and may perform in-band communication. The wireless power reception device may provide information to the wireless power transmission device by performing in-band communication. For example, the wireless power reception device may perform in-band communication based on an amplitude shift keying (ASK) modulation method. At least one additional element may be selectively connected to the resonant circuit of the wireless power reception device through a switch, and the wireless power reception device may perform modulation by controlling the on/off state of the switch. According to the modulation in the wireless power reception device, the amplitude of the current and/or voltage applied to the transmission coil of the wireless power transmission device may be changed. The wireless power reception device may demodulate and/or decode information regarding the amplitude of the current and/or the voltage applied to the transmission coil, thereby identifying information provided by the wireless power reception device.

### [Detailed Description of the Invention]

### [Technical Problem]

### [Technical Solution]

If there is a foreign object on a wireless power transmission device, the wireless power transmission efficiency by the wireless power transmission device may be reduced or the wireless power transmission device may be damaged due to the foreign object. Therefore, a foreign object may be detected through a method of detecting a foreign object (FOD: foreign object detection) of the wireless power transmission device. The method of detecting a foreign object may detect the foreign object based on whether a power (e.g., a ping signal) for identifying the presence of an external object is transmitted and a response is received from the external object.

However, when a foldable electronic device including a hinge structure made of metal is identified as an external object, if the electronic device having the hinge structure is placed on a wireless power transmission device for wireless charging of the electronic device, the metal of the hinge structure may cause a false detection of a foreign object, and accordingly, a false foreign object detection (false FOD) may be performed.

The technical object to be achieved in the disclosure is not limited to the above-described technical objects, and other technical objects not mentioned will be clearly understood by those skilled in the art from the following description.

According to an embodiment of the disclosure, a wireless power transmission device may include a transmission coil, a power supply circuit, memory, and a controller electrically connected to the transmission coil, the power supply circuit, and the memory.

According to an embodiment, the controller may be configured to control the power supply circuit to apply first power to the transmission coil in a first ping operation.

According to an embodiment, the controller may be configured to detect first information related to the first ping operation while performing the first ping operation and store the first information in the memory.

According to an embodiment, the controller may be configured to identify an external object placed on a charging area of the housing of the wireless power transmission device based on the first information and reference information.

According to an embodiment, the controller may be configured to detect second information related to the first ping operation by re-performing the first ping operation and identify a movement of the external object based on a difference the first information and the second information.

According to an embodiment, the controller may be configured to control the power supply circuitry to apply second power for communication with the external object to the transmission coil in a second ping operation.

According to an embodiment, the controller may be configured to perform an operation for a foreign object detection (FOD) and/or an operation of transmitting power for wireless charging to the external object based on identifying that a response from the object is received while performing the second ping operation.

According to an embodiment, a method of operating a wireless power transmission device may include applying first power to a transmission coil of the wireless power transmission device by a power supply circuit of the wireless power transmission device in a first ping operation.

According to an embodiment, the method may include detecting the first information while performing the first ping operation and storing the first information in a memory.

According to an embodiment, the method may include identifying an external object placed on a charging area of a housing of the wireless power transmission device based on the first information and reference information.

According to an embodiment, the method may include detecting second information related to the first ping operation by re-performing the first ping operation and identifying a movement of the external object based on a difference the first information and the second information.

According to an embodiment, the method may include applying second power for communication with the object to the transmission coil by the power supply circuit in a second ping operation.

According to an embodiment, the method may include performing a foreign object detection (FOD) and transmitting power for wireless charging to the external object based on identifying that a response from the object is received while performing the second ping operation.

According to an embodiment, in a non-transitory storage medium storing a program, the program, when executed by a processor of a wireless power transmission device, may include an instruction causes the wireless power transmission device to execute applying first power to a transmission coil of the wireless power transmission device by a power supply circuit of the wireless power transmission device in a first ping operation, detecting first information related to the first ping operation while performing the first ping operation and storing the first information in a memory, identifying an external object placed on a charging area of a housing of the wireless power transmission device based on the first information and reference information, detecting second information related to the first ping operation by re-performing the first ping operation and identifying a movement of the external object based on a difference the first information and the second information, applying second power for communication with the object to the transmission coil by the power supply circuit in a second ping operation, and performing a foreign object detection (FOD) and transmitting power for wireless charging to the external object based on identifying that a response from the object is received while performing the second ping operation.

### [Advantageous Effects]

### [Brief Description of Drawings]

FIG. 1 is a block diagram illustrating an electronic device in a network environment according to various embodiments.
FIG. 2 is a diagram illustrating a wireless power transmission device and a wireless power reception device according to an embodiment.
FIG. 3 is a diagram illustrating a wireless power transmission device and a wireless power reception device according to an embodiment.
FIG. 4 is a diagram illustrating an example of an operation method of a wireless power transmission device according to an embodiment.
FIG. 5 is a diagram illustrating an example of an operation method of a wireless power transmission device according to an embodiment.
FIGS. 6A and 6B are diagrams illustrating an example of an operation method of a wireless power transmission device according to an embodiment.

With regard to the description of the drawings, the same or similar reference numerals may be used to refer to the same or similar elements.

### [Mode for Carrying out the Invention]

Hereinafter, embodiments of the disclosure will be described in detail with reference to the accompanying drawings, so that those skilled in the art may easily implement the embodiments. However, the disclosure may be implemented in many different forms, and is not limited to the embodiments described herein. With regard to the description of the drawings, the same or similar reference numerals may be used to refer to the same or similar elements. In addition, in the drawings and related descriptions, descriptions of well-known functions and configurations may be omitted for the sake of clarity and conciseness. As used in the disclosure, the term "user" may refer to a person who uses an electronic device or a device (e.g., an artificial intelligence electronic device) that uses an electronic device.

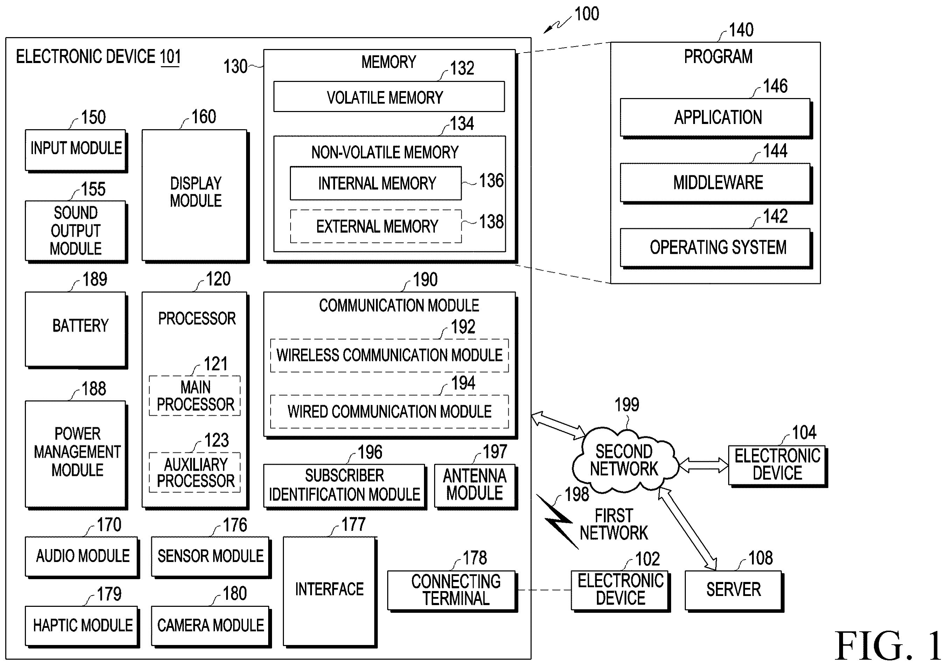

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing leMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

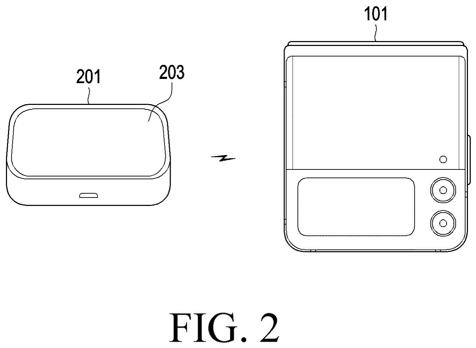

FIG. 2 is a diagram illustrating a wireless power transmission device and a wireless power reception device according to an embodiment.

Referring to FIG. 2, a wireless power transmission device 201 (e.g., the electronic device 102 of FIG. 1) according to an embodiment may transmit power to a wireless power reception device 101 (e.g., the electronic device 101 of FIG. 1) wirelessly. The wireless power transmission device 201 may receive information from the wireless power reception device 101. In an example, the wireless power transmission device 201 may transmit power according to the induction method. When the wireless power transmission device 201 is configured to operate in an inductive method, the wireless power transmission device 201 may include, for example, at least one of a power source, a DC-DC conversion circuit (e.g., a DC/DC converter), a DC-AC conversion circuit (e.g., an inverter), an amplification circuit, an impedance matching circuit, at least one capacitor, at least one coil, or a communication modulation circuit. At least one capacitor may also configure a resonant circuit together with at least one coil. The wireless power transmission device 201 may implement at least a part of a method defined in the Qi standard of the wireless power consortium (WPC). The wireless power transmission device 201 may include a coil capable of generating an induced magnetic field when a current flows according to the induction method. The process in which the wireless power transmission device 201 generates an induced magnetic field may be expressed as the wireless power transmission device 201 wirelessly transmitting power. In addition, an induced electromotive force (or current, voltage, and/or power) may be generated in the coil of the wireless power reception device 101, according to the resonance method or induction method, by the magnetic field generated in the surrounding area. The process in which an induced electromotive force is generated through the coil may be expressed as the wireless power reception device 101 receiving power wirelessly.

The wireless power transmission device 201 according to an embodiment may communicate with the wireless power reception device 101. For example, the wireless power transmission device 201 may communicate with the wireless power reception device 101 according to the in-band method. The wireless power transmission device 201 may modulate data to be transmitted, for example, according to the frequency shift keying (FSK) modulation method and the wireless power reception device 101 may modulate data according to the amplitude shift keying (ASK) modulation method, thereby providing information. The wireless power transmission device 201 may identify information provided by the wireless power reception device 101 based on the amplitude of the current and/or the voltage applied to the transmission coil. Although the description of FIG. 2 illustrates the wireless power reception device 101 as directly transmitting information to the wireless power transmission device 201, this is only for ease of understanding, and those skilled in the art will understand that the wireless power reception device 101 only controls the on/off of at least one internal switch. Operations of performing modulation based on the ASK modulation method and/or the FSK modulation method may be understood as operations of transmitting data (or a packet) according to the in-band communication method, and operations of performing demodulation based on the ASK demodulation method and/or the FSK demodulation method may be understood as operations of receiving data (or a packet) according to the in-band communication method.

In the disclosure, the fact that the wireless power transmission device 201 or the wireless power reception device 101 performs a specific operation may mean that various hardware components included in the wireless power transmission device 201 or the wireless power reception device 101, such as controllers (e.g., a micro-controlling unit (MCU), a field programmable gate array (FPGA), an application-specific integrated circuit (ASIC), a microprocessor, or an application processor (AP)), perform specific operations. Alternatively, the fact that the wireless power transmission device 201 or the wireless power reception device 101 performs a specific operation may mean that the controller controls other hardware to perform a specific operation. Alternatively, the fact that the wireless power transmission device 201 or the wireless power reception device 101 performs a specific operation may mean that at least one instruction for performing the specific operation stored in a storage circuit (e.g., memory) of the wireless power transmission device 201 or the wireless power reception device 101 is executed, thereby causing a controller or other hardware to perform the specific operation.

In the disclosure, the wireless power reception device 101 may be a foldable or flip-type electronic device in which a portion of the housing is folded, and may include a hinge structure made of metal placed on the portion where the portion of the housing is folded. In an embodiment of the disclosure, when the wireless power reception device 101 is placed on the charging area 203, the wireless power transmission device 201 may prevent false foreign object detection (FOD) before receiving a response (e.g., a signal strength packet (SSP)) from the wireless power reception device 101, due to the metal of the hinge structure being mistakenly identified as a foreign object (FO).

In the disclosure, the wireless power transmission device 201 may perform ping, identification and configuration, negotiation for FOD determination, and a power transfer step to transmit power to the wireless power reception device 101 according to a method defined in the Qi standard of the wireless power consortium (WPC).

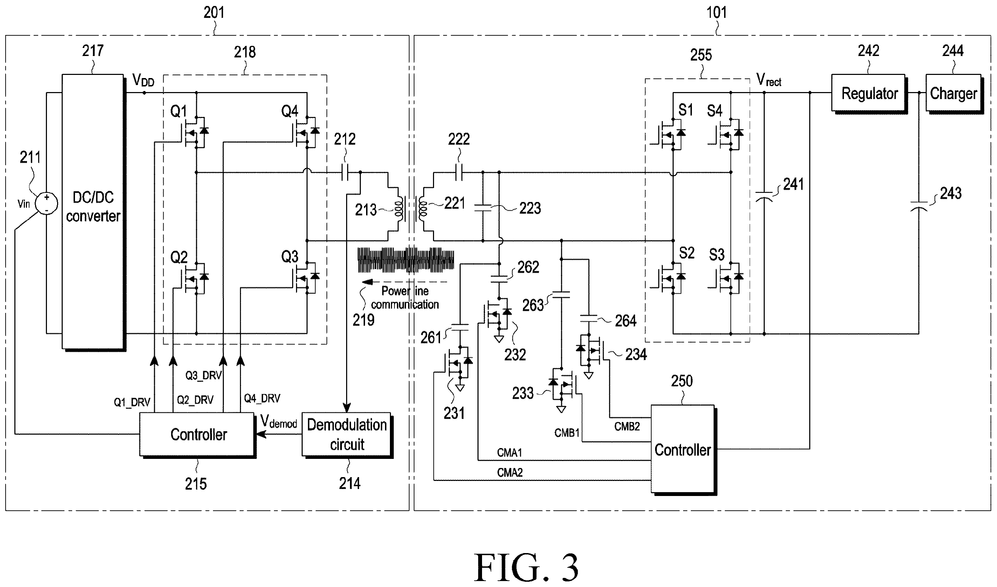

FIG. 3 is a diagram illustrating a wireless power transmission device and a wireless power reception device according to an embodiment. The wireless power transmission device 201 according to an embodiment may include at least one of a power source 211, an inverter 218 including a plurality of switches (Q1, Q2, Q3, and Q4), a capacitor 212, a transmission coil 213, a demodulation circuit 214, a controller 215, or a DC/DC converter 217. According to an embodiment, power provided by the power source 211 may be provided to the DC/DC converter 217. The power source 211 may include at least one of an interface to be connected to an external travel adapter (TA), a battery (not illustrated) of the wireless power transmission device 201, a charger (not illustrated), or a power management integrated circuit (PMIC) (not illustrated). The power source 211 may, for example, provide DC power to the DC/DC converter 217, but the form of the power to be provided is not limited. The DC/DC converter 217 may convert a voltage of the received power and apply the converted voltage to the inverter 218. The DC/DC converter 217 may change the voltage of the applied DC power and provide DC power having the changed voltage (or the driving voltage VDD) to the inverter 218. The DC/DC converter 217 may, for example, perform buck conversion and/or boost conversion, and may, for example, be implemented as a 3-level converter, but those skilled in the art will understand that there is no limit to the type.

The inverter 218 according to an embodiment may output AC power by using the driving voltage VDD provided from a DC/DC converter 217. The plurality of switches Q1, Q2, Q3, and Q4 may, for example, configure a full-bridge circuit, but the number of switches or the type of bridge circuit is not limited. For example, in the case where a full bridge circuit is configured, one end of the transmission coil 213 may be connected to a connection point between the switches Q1 and Q2 through the capacitor 212, and the other end of the transmission coil 213 may be connected to a connection point between the switches Q3 and Q4. The plurality of switches Q1, Q2, Q3, and Q4 may be controlled to be in an on state or an off state. For example, in order to generate AC power, the controller 215 may control the first switch Q1 and the third switch Q3 to be in an on state and control the second switch Q2 and the fourth switch Q4 to be in an off state for the first duration, and for the second duration, the controller 215 may control the first switch Q1 and the third switch Q3 to be in an off state and control the second switch Q2 and the fourth switch Q4 to be in an on state, and may repeatedly perform the above-described control operations. The controller 215 may provide control signals Q1_DRV, Q2_DRV, Q3_DRV, and Q4_DRV for generating the above-described AC power to the plurality of switches Q1, Q2, Q3, and Q4. Here, not only outputting control signals but also refraining from outputting control signals may also be referred to as control by the controller 215. For example, the fact that the controller 215 outputs a first control signal for generating AC power having a first frequency to the inverter 218 may mean that the controller 215 outputs control signals Q1_DRV and Q3_DRV for controlling switches Q1 and Q3 to be in an on state for a first duration corresponding to the first frequency, then outputs control signals Q2_DRV and Q4_DRV for controlling switches Q2 and Q4 to be in an on state for a second duration corresponding to the first frequency, and repeatedly performs the above-described output operations. The fact that the controller 215 outputs a second control signal for generating AC power having a second frequency to the inverter 218 may mean that the controller 215 outputs control signals Q1_DRV and Q3_DRV for controlling switches Q1 and Q3 to be in an on state for a first duration corresponding to the second frequency, then outputs control signals Q2_DRV and Q4_DRV for controlling switches Q2 and Q4 to be in an on state for a second duration corresponding to the second frequency, and repeatedly performs the above-described output operations and, in this case, the first duration and the second duration corresponding to the second frequency may differ from the first duration and the second duration corresponding to the first frequency. At least one of the DC/DC converter 217 or the inverter 218 may be named as a power supply circuit. The controller 215 may control a power supply circuit (e.g., at least one of the DC/DC converter 217 or the inverter 218) so as to apply power to the transmission coil 213.

According to an embodiment, the AC power generated by the inverter 218 may be applied to the transmission coil 213. The inverter 212 may configure a resonant circuit with the transmission coil 213. The transmission coil 213 may generate a magnetic field based on the applied AC power. A portion of the magnetic field (or magnetic flux) generated by the transmission coil 213 may pass through a cross-section of a reception coil 221 of the wireless power reception device 101. As the magnetic field passing through the cross-section of the reception coil 221 changes over time, an induced electromotive force (e.g., current, voltage, or power) may be generated in the reception coil 221.

According to an embodiment, the demodulation circuit 214 may demodulate a signal (e.g., a voltage 219 applied to both ends of the transmission coil 213) applied to the transmission coil 213, and may output a demodulated signal (V_{demod}). The demodulation circuit 214 may output the demodulated signal (V_{demod}) by down-converting the signal (e.g., the voltage 219 at both ends) applied to, for example, the transmission coil 213 by the frequency (e.g., 100 to 210 kHz) of the AC power. For example, the demodulation circuit 214 may include a mixer and/or a multiplier circuit for removing a carrier component (e.g., 100 to 210 kHz, which is the frequency of AC power) for wireless power transmission. Since a waveform in which a component due to modulation of the wireless power reception device 101 and an AC power component due to the wireless power transmission device 201 are mixed may be applied to both ends of the coil 213 of the wireless power transmission device 201, the frequency component (e.g., 100 to 210 kHz) of the AC power is referred to as a carrier wave component, and those skilled in the art will understand that the wireless power reception device 101 does not actually generate an electromagnetic wave in which modulated data is mixed with a carrier wave. Accordingly, a carrier wave component (e.g., a frequency of 100 to 210 kHz, which is the frequency of the AC power) may be removed from the voltage 219 at both ends of the transmission coil 213. The demodulation circuit 214 may additionally filter (low-pass filter) the demodulated signal (V_{demod}) and output the same. The demodulation circuit 214 may also include a low-pass filter. Alternatively, the demodulation circuit 214 may filter the voltage 219 at both ends of the transmission coil 213, and then down-convert the filtered voltage by a frequency (e.g., 100 to 210 kHz) of the AC power to generate the demodulated signal (V_{demod}). The amplitude of the voltage 219 at both ends of the transmission coil 213 may be changed according to the ASK modulation of the wireless power reception device 101. According to an embodiment, the controller 215 may identify information provided by the wireless power reception device 101, based on the demodulated signal (V_{demod}) output by the demodulation circuit 214. The controller 215 may perform analog-to-digital conversion (ADC) on, for example, the demodulated signal (V_{demod}). The controller 215 may decode a digital value obtained as an ADC result, and may identify information provided by the wireless power reception device 101 according to the decoding result. Those skilled in the art will understand that the decoding method may be based on, for example, the Qi standard, but is not limited thereto. In the above-described embodiment, it has been described that the demodulation circuit 214 performs frequency down-conversion (e.g., carrier removal) and/or low-pass filtering and the controller 215 performs an analog-to-digital conversion (ADC) and/or decoding, but this is merely exemplary. Those skilled in the art will understand that the demodulation circuit 214 may be implemented to further perform at least one of the ADC or decoding, and the controller 215 may be implemented to further perform frequency down-conversion (e.g., carrier removal) and/or low-pass filtering.

According to an embodiment, the wireless power reception device 101 may include at least one of a reception coil 221, a capacitor 222, a capacitor 223, a rectifier circuit 255, a controller 250, a plurality of capacitors 261, 262, 263, and 264, a plurality of switches 231, 232, 233, and 234, a capacitor 241, a regulator 242, a capacitor 243, or a charger 244.

According to an embodiment, the reception coil 221, the capacitor 222, and the capacitor 223 may configure a resonant circuit. One end of the capacitor 222 may be connected to the reception coil 221, and the other end of the capacitor 222 may be connected to one end of the capacitor 223 and one end of the rectifier circuit 255. One end of the capacitor 223 may be connected to the other end of the capacitor 222, and the other end of the capacitor 223 may be connected to the other end of the reception coil 221. In other words, the capacitor 223 may be connected in parallel to a circuit in which the reception coil 221 and the capacitor 222 are connected in series. The other terminal of the capacitor 223 may be connected to the other end of the rectifier circuit 255.

According to an embodiment, the rectifier circuit 255 may include a plurality of switches S1, S2, S3, and S4 that configure a full bridge circuit. One end of the resonant circuit may be connected to a connection point between the switches S1 and S2, and the other end of the resonant circuit may be connected to a connection point between the switches S3 and S4. The rectifier circuit 255 may convert the AC power received through the reception coil 221 into DC power. The controller 250 may control the on/off states of the multiple switches S1, S2, S3, and S4 such that the AC power may be converted into DC power.

According to an embodiment, the capacitor 241 and the regulator 242 may be connected to the rectifier circuit 255. One end of the capacitor 241 may be grounded. The regulator 242 may convert (e.g., buck converting and/or boost converting) and/or regulate a voltage of rectified power output from the power conversion circuit.

According to an embodiment, the charger 244 may charge a battery (not shown) by using the power converted and/or regulated by the regulator 242. According to an embodiment, the charger 244 may control a voltage and/or a current for charging a battery according to a charging mode (e.g., a constant current (CC) mode, a constant voltage (CV) mode, or a fast charging mode) of the battery. Depending on the implementation, a PMIC (not shown) may be connected to the regulator 242 instead of the charger 244.

According to an embodiment, the controller 250 may perform modulation corresponding to information to be provided. The controller 250 may determine a capacitor to perform modulation among the plurality of capacitors 261, 262, 263, and 264. Depending on the capacitor to perform modulation, the difference in the amplitude of the voltage 219 sensed by the wireless power transmission device 201 may be changed. For example, when the modulation is performed by only one capacitor 261, it is assumed that the difference in the amplitude of the voltage 219 sensed by the wireless power transmission device 201 (e.g., the difference between the maximum amplitude of the voltage 219 during the time when the switch 231 is in the on state and the maximum amplitude of the voltage 219 during the time when the switch 231 is in the off state) is a first value. In this case, since the capacitors 262, 263, and 264 are not used for modulation, the switches 232, 233, and 234 may remain in the off state. When the modulation is performed by the capacitor 261 and the capacitor 262, the difference in the amplitude of the voltage 219 sensed by the wireless power transmission device 201 (e.g., the difference between the maximum amplitude of the voltage 219 during the time when the switches 231 and 232 are in an on state and the maximum amplitude of the voltage 219 during the time when the switches 231 and 232 are in an off state) may be a second value, and the second value may be larger than the first value. In this case, since the capacitors 263 and 264 are not used for modulation, the switches 233 and 234 may remain in the off state. The wireless power reception device 101 may adjust the degree of modulation (or the modulation depth) by adjusting a capacitor to perform modulation among the plurality of capacitors 261, 262, 263, and 264. As described above, while performing modulation using the determined capacitor, the controller 250 may output or refrain from outputting at least some of the control signals (CMA1, CMA2, CMB1, and CMB2) so that the switches corresponding to the undetermined capacitors remain in an off state. For example, the capacitance of the capacitor 262 may be smaller than that of the capacitor 261, and the capacitance of the capacitor 264 may be smaller than that of the capacitor 263, but this is a mere example, and there is no limit to the size of the capacitance and the capacitances may be the same.

The controller 215 described in the above-described FIG. 3 may be referred to as a control circuit, and may be a micro controlling unit (MCU), a field programmable gate array (FPGA), an application specific integrated circuit (ASIC), at least one processor, or an application processor (AP). The controller 250 may be referred to as a control circuit, and may be a micro controlling unit (MCU), a field programmable gate array (FPGA), an application specific integrated circuit (ASIC), at least one processor, or an application processor (AP).

Referring again to FIG. 2, the controller 215 of the wireless power transmission device 201 according to an embodiment may identify that an external object is placed (e.g., arranged or attached) on or removed from the charging area 203, and may perform a first ping operation (e.g., Q ping operation) of a ping phase for determining whether a foreign object exists (e.g., distinguishing between an object capable of receiving wireless power and a foreign object). While performing the first ping operation, the controller 215 may determine whether an external object is moved, so as to prevent the object from being erroneously determined as a foreign object (Q-FOD) in the ping phase, even though the object is a device (e.g., a wireless power reception device 101) capable of receiving wireless power and being charged. Here, the charging area 203 of the wireless power transmission device 201 may be configured as a part (e.g., a surface opposite to a surface placed on the bottom or an upper surface) of the housing of the wireless power transmission device 201. The first ping operation may be an operation of outputting (e.g., applying first power) the first ping signal to the transmit coil 213 for a specified time by the first current output from the converter 217 being applied to the inverter 218. Here, the first ping signal may be a Q ping signal, and may be named "first power".

According to an embodiment, the controller 215 may perform an operation (e.g., a preparation step or an initial Q ping operation) to obtain (e.g., detect, measure, or receive) reference information for a specified period of time (e.g., 1.5s) after the wireless power transmission device 201 is turned on (e.g., power on or Tx boot up), and store or update the reference information in the memory of the wireless power transmission device 201. Here, the reference information may include at least one of a voltage and/or a current detected through the first ping operation, a reference quality (Q) factor value, a reference frequency, and a reference L/R value (e.g., a value related to calculation of a Q value (Q = 2pi f L/R)) in a state where an object is not placed on the charging area 203.

According to an embodiment, the controller 215 may control the inverter 218 included in the power supply circuit to output (e.g., apply first power) the first ping signal to the transmission coil 213 while performing the first ping operation at a specified ping period (e.g., 550ms). Here, the first power may be power of the first frequency transmitted through the transmission coil 213 to identify whether an external object is identified (e.g., present, detected, or identified) in the charging area 203 in the first ping operation. According to an embodiment, the controller 215 may detect information (e.g., first information) related to the first ping operation while performing the first ping operation (e.g., applying first power) to the transmission coil 213. Here, the information related to the first ping operation may include at least one of a quality factor (Q factor) value, a resonant frequency, or an L/R value detected while performing the first ping operation.

According to an embodiment, the controller 215 may identify that an external object is placed on the charging area 203, based on the obtained information related to the first ping operation and the reference information. The controller 215 may identify whether an external object is disposed on the charging area, based on a difference between the Q factor value included in the information related to the first ping operation and the reference factor value, and/or a difference between the resonant frequency included in the information related to the first ping operation and the reference frequency. The controller 215 may identify that an external object is placed on the charging area 203 when the reference factor value is greater than the detected Q factor value and the detected resonant frequency is not the same as the reference frequency. When an external object is placed on the charging area 203, the Q factor may be changed (e.g., decreased), and thus, the controller 215 may identify that the external object is placed on the charging area 203 when the comparison result between the detected Q factor value and the reference factor value has a difference outside a tolerance range. If the reference factor value is not greater than the detected Q factor value and the detected resonant frequency is the same as the reference frequency, the controller 215 may determine that there is no external object, continue to perform the first ping operation, and detect information related to the first ping operation while (e.g., for a specified time) performing the first ping operation. Thereafter, the controller 215 may again identify whether an external object exists.

According to an embodiment, when identifying that an external object exists on the charging area 203, the controller 215 may identify whether the external object is moved. For example, the controller 215 may identify (e.g., monitor) whether the external object is moved for a prespecified time (e.g., a ping period). The controller 215 may compare the previously detected Q factor value and the currently detected Q factor value (or Q factor value + tolerance), identify a change in the Q factor value (e.g., obtain the amount of change), and, if the previously detected Q factor value and the currently detected Q factor value (or Q factor value + tolerance) are different and there is a change (or difference) in the Q factor value, the controller 215 may identify that there is movement of an external object. If the previously detected Q factor value and the currently detected Q factor value (or Q factor value + tolerance) are the same, the controller 215 may identify that there is no movement of an external object.

According to an embodiment, when the controller 215 identifies that an external object has moved, the controller 215 may not perform a foreign object (FO) determination operation for determining whether there is a foreign object with respect to the external object, and may perform a second ping operation for outputting a second ping signal for communication with the external object to the transmission coil 213. Here, the second ping operation may be an operation of outputting (e.g., applying second power) the second ping signal to the transmission coil 213 for a specified time by the second current output from the converter 217 being applied to the inverter 218. Here, the second ping signal may be a digital (D) ping signal, and may be named "second power". Here, the second power may be power of the second frequency (e.g., a digital ping frequency of 127.7 kHz) transmitted through the transmission coil 213 to communicate with an external object. According to an embodiment, while performing the second ping operation of outputting the second ping signal to the transmission coil 213, if the external object is an object (e.g., the wireless power reception device 101) capable of receiving wireless power and not a foreign object, the wireless power transmission device 201 may receive a response (e.g., an SSP) to the second ping operation from the external object. The wireless power transmission device 201 and the wireless power reception device 101 may perform in-band communication, and the wireless power transmission device 201 may receive a response (e.g., valid data based on an SSP or a demodulation result) from the wireless power reception device 101 regarding the second ping operation through the in-band communication.

According to an embodiment, if no response is received during the second ping operation, the controller 215 may again perform the Q-ping operation without determining the presence of a foreign object upon identifying that the object has moved to prevent false foreign object detection (FOD) in which an external object is actually an object capable of receiving wireless power, but is erroneously identified as a foreign object.

According to an embodiment, when a response to the second ping operation is received while performing the second ping operation (e.g., applying the second ping signal), the controller 215 may identify an external object as an object (e.g., the wireless power reception device 101) capable of receiving wireless power and may perform at least one operation corresponding to an identification phase and a configuration phase with the external object, and the corresponding operation may follow, for example, the Qi standard but is not limited thereto. After performing the configuration phase, the controller 215 may perform a negotiation phase and a power transfer phase. The controller 215 may perform a foreign object detection (FOD) operation by using a Q factor obtained in the Q ping phase (e.g., the Q factor obtained before (or immediately before) receiving a response) in the negotiation phase and the power transfer phase. If no foreign object is detected, the controller 215 may continue to transmit power (e.g., the third power) for wireless charging to an object (e.g., the wireless power reception device 101) capable of receiving the wireless power identified in the power transmission step. If a foreign object is detected, the controller 215 may stop transmission of power for wireless charging.

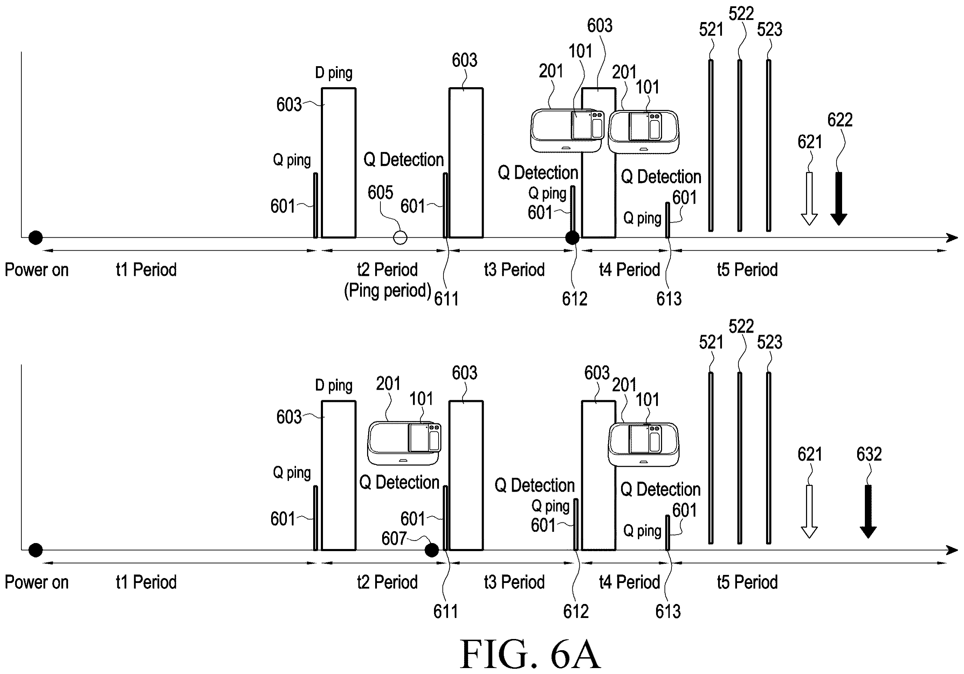

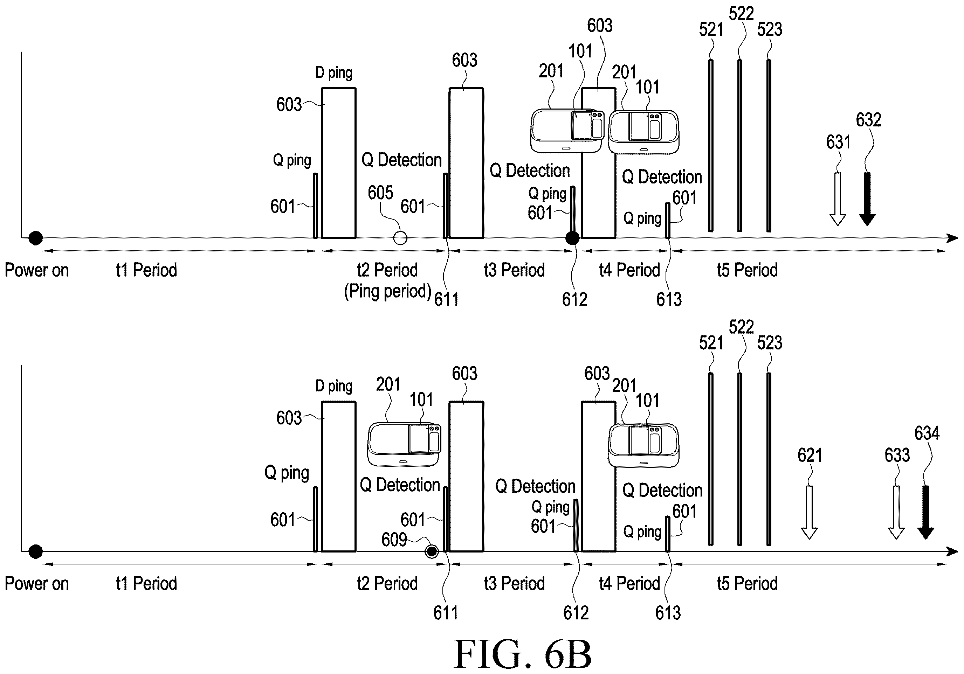

According to an embodiment, while performing the second ping operation (e.g., outputting a D ping signal in the fourth period of FIG. 6) that outputs the second ping signal (D ping signal) of the ping phase, the controller 215 of the wireless power transmission device 201 may identify that an external object (e.g., the wireless power reception device 101) is placed on the charging area. Since the controller 215 does not detect information such as a Q factor and a resonant frequency during the second ping operation, the controller 215 may compare the reference information stored in the memory with information related to the first ping operation obtained in the previous first ping operation, and, if there is no difference between the reference information and the information related to the first ping operation as a result of the comparison, the controller 215 may identify that an external object is placed on the charging area during the second ping operation. Accordingly, the controller 215 may again perform the first ping operation (Q ping operation).

As such, in the above-described embodiment, the main components of the wireless power transmission device 201 of FIGS. 2 and 3 have been described. However, in various embodiments, not all of the components illustrated in FIGS. 2 and 3 are essential, and the wireless power transmission device 201 may be implemented by more components than the illustrated components or by fewer components than the illustrated components. In addition, the positions of the main components of the wireless power transmission device 201 described above through FIGS. 2 and 3 may be changed according to various embodiments.

According to an embodiment, a wireless power transmission device (e.g., the wireless power transmission device 201 of FIGS. 2 and 3) may include a transmission coil 213, a power supply circuit, memory, and a controller 215 electrically connected to the transmission coil, the power supply circuit, and the memory.

According to an embodiment, the controller may be configured to control the power supply circuit to apply first power to the transmission coil in a first ping operation.

According to an embodiment, the controller may be configured to detect first information related to the first ping operation while performing the first ping operation and store the first information in the memory.

According to an embodiment, the controller may be configured to identify an external object placed on a charging area 203 of the housing of the wireless power transmission device based on the first information and reference information.

According to an embodiment, the controller may be configured to detect second information related to the first ping operation by re-performing the first ping operation and identify a movement of the external object based on a difference the first information and the second information.

According to an embodiment, the controller may be configured to control the power supply circuitry to apply second power for communication with the external object to the transmission coil in a second ping operation.

According to an embodiment, the controller may be configured to perform an operation for a foreign object detection (FOD) and/or an operation of transmitting power for wireless charging to the external object based on identifying that a response from the object is received while performing the second ping operation.

According to an embodiment, the controller may be configured to re-perform the first ping operation based on identifying that a response from the external object is not received while performing the second ping operation.

According to an embodiment, information related to the first ping operation may include at least one of a Q factor of the first ping operation or a resonant frequency of the first ping operation.

According to an embodiment, the controller may be configured to detect the resonant frequency based on a voltage detected at the transmission coil corresponding to the first power while performing the first ping operation and identify that the external object is placed on a charging area based on a difference between the Q factor and the reference factor included in the reference information and/or a difference between the resonant frequency and a reference frequency.

According to an embodiment, the controller may be configured to identify that the external object is placed on the charging area based on the reference factor being greater than the Q factor and the resonant frequency differing from the reference frequency.

According to an embodiment, the reference factor is a Q factor, which is detected while performing the first ping operation in a state in which an external object is not placed on the charging area, and may be previously stored in the memory of the wireless power transmission device.

According to an embodiment, the reference frequency is a resonant frequency, which is detected while performing the first ping operation in a state in which an external object is not placed on the charging area, and is previously stored in the memory.

According to an embodiment, the controller may be configured to identify that the object is not placed on the charging area and re-perform the first ping operation base on the reference factor being not greater than the Q factor and the resonant frequency corresponding to the reference frequency.

According to an embodiment, the controller may be configured to identify that the external object does not move and perform the operation to determine whether the foreign object exists on the charging area base on identifying that a currently detected Q factor is not changed by comparing a previously detected Q factor with the currently detected Q factor.

According to an embodiment, the controller may be configured to perform the operation to determine whether the foreign object exists on the charging area and perform the second ping operation based on identifying that the external object does not move after re-performing the first ping operation.

According to an embodiment, the controller may be configured to identify that the external object is a wireless power receiver base on receiving the response from the external object and control the power supply circuitry to apply third power for wireless charging of the wireless power receiver to the transmission coil.

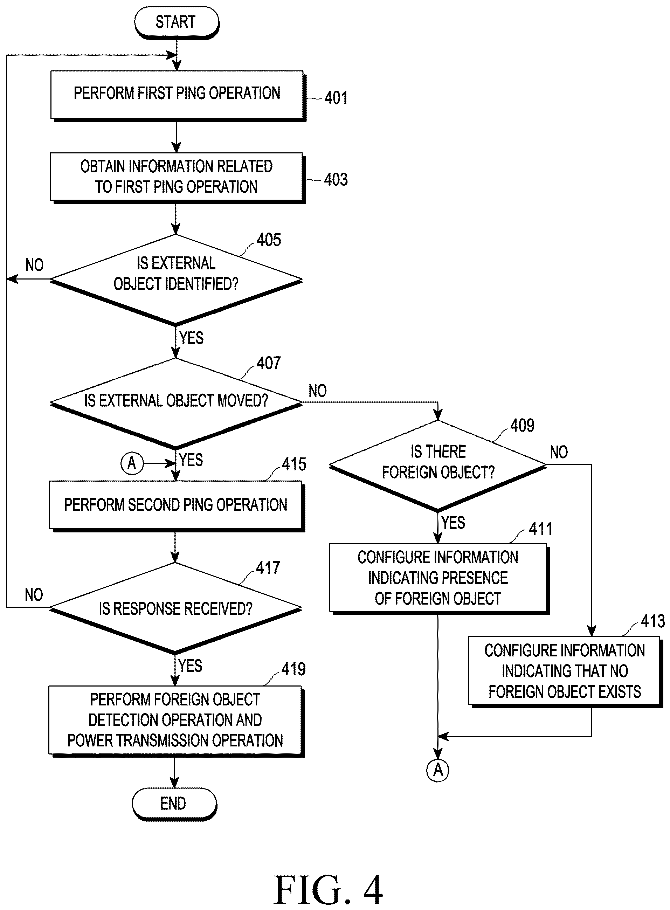

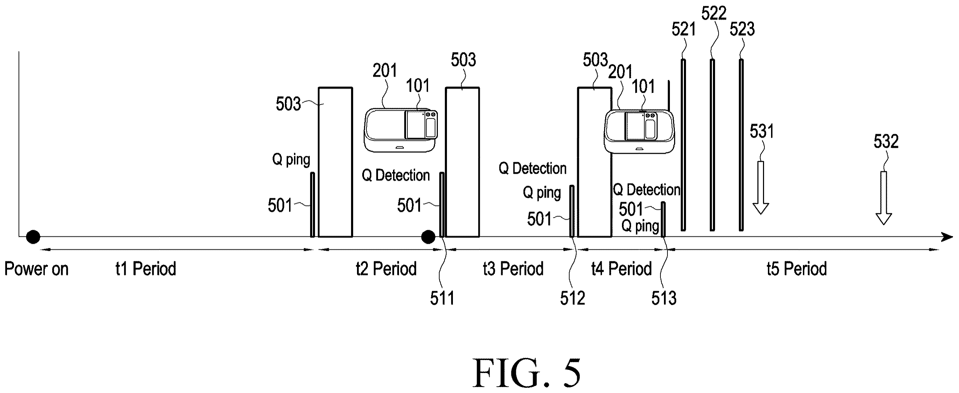

FIG. 4 is a diagram illustrating an example of an operation method of a wireless power transmission device according to an embodiment, and FIG. 5 is a diagram illustrating an example of an operation method of a wireless power transmission device according to an embodiment. In the following embodiments, each of the operations may be performed sequentially, but it is not necessarily performed sequentially. For example, the order of the respective operations may be changed, and at least two operations may be performed in parallel.

Referring to FIGS. 4 and 5, before performing operation 401, the wireless power transmission device 201 (e.g., the wireless power transmission device 201 of FIGS. 2 and 3) according to an embodiment may obtain (e.g., detect, measure, or receive) information related to the first ping operation before an external object is placed (e.g., when the first ping signal is output in the t1 period of FIG. 5) after the wireless power transmission device 201 is turned on (e.g., power on or Tx boot up), and may store or update the obtained information related to the first ping operation as reference information in the memory of the wireless power transmission device 201. The reference information may include at least one of a reference quality (Q) factor value, a reference frequency (F) value, or a reference L/R value detected through the first ping operation (e.g., a Q ping), in a state in which an external object 101 is not placed on the charging area (e.g., the charging area 203 of FIG. 2).

Referring again to FIGS. 4 and 5, in operation 401, the wireless power transmission device according to an embodiment may perform the first ping operation. For example, the first ping operation may be an operation of outputting a first ping signal 501 (e.g., applying first power) from a power supply circuit (e.g., a first current output from a converter is applied to the inverter) to the transmission coil 213. Here, the first ping signal 501 is a Q ping signal, and may be referred to as "first power." In an embodiment, the first ping operation and the second ping operation may be performed. For example, the first ping signal 501 may be an analog ping or Q ping signal and may be transmitted with "first power", and the second ping signal 503 may be a digital ping or D ping signal and may be transmitted with "second power". In operation 403, the wireless power transmission device 201 may obtain information 511 (e.g., Q detection) related to the first ping operation. For example, the information 511 related to the first ping operation may include at least one of a quality factor (Q factor) value, a resonant frequency, or an L/R value detected during the first ping operation.

In operation 405, the wireless power transmission device 201 may compare the obtained information 511 related to the first ping operation with reference information to identify whether an external object 101 is identified. If the external object 101 is identified as a result of the identification, the wireless power transmission device 201 may identify that the external object 101 (e.g., the wireless power reception device 101) is placed on the charging area (e.g., the charging area 203 of FIG. 2) of the housing of the wireless power transmission device 201 based on the information 511 related to the first ping operation and the reference information, and then may perform operation 407. The wireless power transmission device 201 may identify that the external object 101 is placed on the charging area in the t2 period of the ping phase as illustrated in FIG. 5. As a result of identification in operation 405, if no external object is identified, the wireless power transmission device 201 may identify that no external object is placed on the charging area, and may then perform operation 401 again. According to an embodiment, the wireless power transmission device 201 may identify whether the external object 101 is disposed on the charging area, based on a difference between a Q factor value (Q_Value) included in the information 511 related to the first ping operation and a reference factor value included in the reference information and/or a difference between a resonant frequency (F_Value) included in the information 511 related to the first ping operation and the reference frequency. If the reference factor value is greater than the detected Q factor value and the detected resonant frequency is not the same as the reference resonant frequency, the wireless power transmission device 201 may identify that the external object is placed on the charging area. When the external object 101 is placed on the charging area, the Q factor may be changed (e.g., decreased), and thus, if the comparison result of the detected Q factor value and the reference factor value has a difference outside of a tolerance range, the wireless power transmission device 201 may identify that the external object 101 is placed on the charging area. If the reference factor value is not greater than the detected Q factor value and the detected resonant frequency is the same as the reference resonant frequency, the wireless power transmission device 201 may determine that there is no external object 101 and may continue to perform the first ping operation in operation 401.

In operation 407, the wireless power transmission device 201 may identify whether the external object 101 is moved, based on a change in information related to the first ping operation. According to an embodiment, the wireless power transmission device 201 may compare the previously detected Q factor value (e.g., the Q factor value of the first ping operation-related information 512) and the currently detected Q factor value (or Q factor value + tolerance) to identify a change in the Q factor value (e.g., obtain the amount of change).

As a result of identification in operation 407, if it is identified that the external object 101 is moved as the information related to the first ping operation is changed (operation 407 = Yes), the wireless power transmission device 201 may perform operation 415. For example, when the user moves the external object 101 to the center of the charging area to properly place the external object 101 on the charging area as the external object 101 is misplaced at the edge of the charging area, the wireless power transmission device 201 may obtain information 512 related to the changed first ping operation. Here, the wireless power transmission device 201 may compare the previously obtained information 511 related to the first ping operation with the currently obtained information 512 related to the first ping operation, and in case that the currently obtained information 512 related to the first ping operation has been changed (e.g., the currently detected Q factor value is lower than the previously detected Q factor value), the wireless power transmission device 201 may identify that the external object 101 has been moved. Here, the external object 101 whose movement is identified may be an object (e.g., the wireless power reception device 101 in FIGS. 1, 2, 3, and 5) capable of receiving power. For example, as illustrated in FIG. 5, the t2 period of the ping phase may be a specified ping period (e.g., 550ms), and the operations 401 to 407 may be performed during the t2 and t3 periods of the ping phase to obtain information 511 and 512 related to a first ping operation, to identify the external object 101, and to identify whether the external object 101 has been moved. According to an embodiment, if the previously detected Q factor value (e.g., the Q factor value included in the information 511 related to the first ping operation) and the currently detected Q factor value (or Q factor value + tolerance) (e.g., the Q factor value (or Q factor value + tolerance) included in the information 512 related to the first ping operation) are different and there is a change (or difference) in the Q factor value (e.g., the detected Q factor value is low in the t3 and/or t4 periods of FIG. 5), the wireless power transmission device 201 may identify that there is movement of the external object 101.

As a result of identification in operation 407, if it is identified that the external object 101 is not moved (operation 407 = No), the wireless power transmission device 201 may perform operation 409. According to an embodiment, if the previously detected Q factor value (e.g., the Q factor value included in the information 511 related to the first ping operation) and the currently detected Q factor value (or Q factor value + tolerance) (e.g., the Q factor value (or Q factor value + tolerance) included in the information 512 related to the first ping operation) are the same, the wireless power transmission device 201 may identify that the external object 101 is in a state of no movement.

In operation 409, the wireless power transmission device 201 may identify whether there is a foreign object on the external object 101 placed on the charging area, based on the information 512 related to the first ping operation. Here, the operation of identifying whether there is a foreign object may be an operation of primarily identifying whether there is a foreign object in the charging area based on information (511 to 513) related to the first ping operation obtained (or detected) in the ping phase prior to the foreign object detection (FOD) operation performed in the t5 period of FIG. 5.

As a result of identification in operation 409, if it is identified that a foreign object exists (operation 409 - Yes), in operation 411, the wireless power transmission device 201 may configure information indicating the presence of the foreign object. After performing operation 411, the wireless power transmission device 201 may perform operation 415. According to an embodiment, if the last detected Q factor value (Q_Last) (e.g., a detected Q factor value included in the information 512 or 513 related to the first ping operation) is smaller than a threshold factor value (thr_Q1) and a last detected resonant frequency (F_Last) (e.g., a resonant frequency included in the information 512 related to the first ping operation) is greater than a threshold frequency (thr_F1), the wireless power transmission device 201 may identify that a foreign object (FO) exists in the external object 101. Here, the information indicating the existence of a foreign object may include a foreign object flag value (e.g., FO Flag=1), a last resonant frequency value (e.g., F_Last), and a last Q factor value (e.g., Q_Last).

As a result of identification in operation 409, if it is identified that no foreign object exists (operation 409 - No), in operation 413, the wireless power transmission device 201 may configure information indicating that no foreign object exists. After performing operation 413, the wireless power transmission device 201 may perform operation 415. According to an embodiment, if a Q factor value (e.g., a last detected Q factor value (Q_Last)) included in the information 512 related to the first ping operation is not smaller than a threshold factor value and a resonant frequency (e.g., a last detected resonant frequency (F_Last)) included in the information 512 related to the first ping operation is not greater than a threshold frequency, the wireless power transmission device 201 may identify that no foreign object exists. Here, information indicating the absence of foreign object may include a foreign object flag value (e.g., FO Flag=0), a previously detected resonant frequency value (e.g., F_value), and a previously detected Q factor value (e.g., Q_value).

In operation 415, the wireless power transmission device 201 may perform a second ping operation for outputting the second ping signal (D ping signal) 503 for communication with the external object 101 (e.g., outputting of the D ping signal in the third period of FIG. 5) from a power supply circuit to a transmission coil. Here, the second ping operation may be an operation of outputting (e.g., applying second power) the second ping signal 503 to the transmission coil 213 for a specified time by the second current output from the converter 217 being applied to the inverter 218. Here, the second ping signal 503 may be a digital (D) ping signal, and may be named "second power". Here, the second power may be power of the second frequency (e.g., a digital ping frequency of 127.7 kHz) transmitted through the transmission coil 213 to communicate with an external object 101.

In operation 417, the wireless power transmission device 201 may identify whether a response to the second ping operation is received from the external object 101 while performing the second ping operation.

As a result of identification in operation 417, if no response is received (operation 417 - No), the wireless power transmission device may again perform the first ping operation of outputting the first ping signal in operation 401 (e.g., outputting the Q ping signal in the fourth period of FIG. 5), and may obtain information 513 related to the first ping operation. According to an embodiment, the wireless power transmission device 201 may repeatedly perform the above operations 403 to 407 to identify an external object 101 and determine whether the external object 101 has been moved. If no response is received during the second ping operation, the wireless power transmission device 201 according to an embodiment may again perform the Q-ping operation of operation 401 without identifying the presence of a foreign object in operation 409 upon identifying that the external object 101 has moved to prevent false foreign object detection (FOD) in which the external object 101 is actually an object capable of receiving wireless power, but is erroneously identified as a foreign object.

As a result of the identification in operation 417, if a response is received (operation 417- Yes), the wireless power transmission device 201 may perform operation 419.

In operation 419, the wireless power transmission device 201 may perform a foreign object detection (FOD) operation (e.g., FODs 531 and 532 in the t5 period of FIG. 5) and a power transmission operation for wireless charging. According to an embodiment, when a response (e.g., signal strength packet (SSP)) to the second ping operation is received (521) while performing the second ping operation (e.g., applying the second ping signal 503), the wireless power transmission device 201 may identify the external object 101 as an object (e.g., the wireless power reception device 101) capable of receiving wireless power and may perform at least one operation corresponding to an identification phase and a configuration phase with the external object 101, and the corresponding operation may follow, for example, the Qi standard but is not limited thereto. After performing the configuration phase, the controller 215 may perform a negotiation phase 523 and a power transfer phase (e.g., t5 period). According to an embodiment, the wireless power transmission device 201 may perform foreign object detection (FOD) operations 531 and 532 by using a Q factor (e.g., a Q factor obtained in the Q ping phase (e.g., the Q factor obtained before (or immediately before) receiving a response) in the negotiation phase 523 and the power transfer phase (e.g., t5 period). According to an embodiment, if no foreign object is detected, the wireless power transmission device 201 may continue to transmit power (e.g., the third power) for wireless charging to the external object 101 (e.g., the wireless power reception device 101) identified as being capable of receiving wireless power in the power transmission step (e.g., t5 interval). The wireless power transmission device 201 may stop transmission of power for wireless charging if a foreign object is detected through a foreign object detection (FOD) operation. If a foreign object is detected through the foreign object detection (FOD) operation, the wireless power transmission device 201 may configure the amount of power transmitted for wireless charging to be low.

FIGS. 6A and 6B are diagrams illustrating an example of an operation method of a wireless power transmission device according to an embodiment.

Referring to FIG. 6A, the wireless power transmission device 201 according to an embodiment may identify that a foreign object is first placed (605) on the t2 period, and may identify that the external object 101 (e.g., the wireless power reception device 101) is placed on the charging area while performing the second ping operation (e.g., outputting the D ping signal 603 in the t4 period of FIG. 6A) for outputting the second ping signal (D ping signal) 603 of the ping phase. In the t4 period, the wireless power transmission device 201 may receive a response signal (e.g., an SSP). If there is no difference between the reference information and the information 612 related to the first ping operation by comparing the reference information stored in the memory with the information (612) related to the first ping operation obtained from the previous first ping operation (e.g., the Q ping operation outputting the Q ping signal 601), the wireless power transmission device 201 may identify that the external object 101 is placed on the charging area during the second ping operation. The wireless power transmission device 201 may again perform the first ping operation (Q ping operation) to identify movement of the external object 101, identify the movement situation, and identify the presence of a foreign object (FO). Since the wireless power transmission device 201 has identified the foreign object attachment 605, it may perform a Q-factor foreign object detection (Q-FOD) operation 621 in the configuration phase or negotiation phase, and may then determine to stop the Tx transmission 622 before entering the power transfer phase (e.g., the t5 period). In an embodiment, the power transmission device 201 may identify a power loss state based on power information (a received power packet (RPP) and a signal strength packet (SSP)) received from the external object 101, and may determine to stop Tx transmission 622 depending on whether the foreign object is identified. Here, the external object 101 may be a wireless reception device capable of receiving power, and may operate in an extended power profile (EPP).

Referring to FIG. 6A, the wireless power transmission device 201 according to an embodiment may identify that the foreign object (FO) and the external object 101 are placed (e.g., attached) on the edge of the charging area in a t2 period 607, and may perform the first ping operation (Q ping operation) to identify movement of the foreign object (FO) and/or the external object 101 and to identify whether the foreign object

(FO) exists. While performing the second ping operation (e.g., outputting the D ping signal 603 in the t3 and t4 periods of FIG. 6A), the external object 101 (e.g., the wireless power reception device 101) may be identified as being placed on the charging area. In the t3 period and/or the t4 period, the wireless power transmission device 201 may receive a response signal (e.g., an SSP). The wireless power transmission device 201 may perform a Q factor foreign object detection (Q-FOD) operation 621 in the configuration phase or negotiation phase as the foreign object (FO) and the external object 101 are attached together, and may stop the Tx transmission 632 in the power transfer phase 630. In an embodiment, the power transmission device 201 may identify a power loss state based on power information (a received power packet (RPP) and a signal strength packet (SSP)) received from the external object 101, and may determine to stop Tx transmission 622 depending on whether the foreign object is identified. Here, the external object 101 may be a wireless reception device capable of receiving power, and may operate in an extended power profile (EPP).

Referring to FIG. 6B, the wireless power transmission device 201 according to an embodiment may identify that a foreign object is first placed (605) on the t2 period, and may identify that the external object 101 (e.g., the wireless power reception device 101) is placed on the charging area while performing the second ping operation (e.g., outputting the D ping signal 603 in the t4 period of FIG. 6A) for outputting the second ping signal (D ping signal) 603 of the ping phase. In the t4 period, the wireless power transmission device 201 may receive a response signal (e.g., an SSP). The wireless power transmission device 201 may perform the first ping operation (Q ping operation) to identify movement of the external object 101, identify the movement situation, and identify the presence of a foreign object (FO). Since the wireless power transmission device 201 has identified the foreign object attachment 605, it may perform a Q-factor foreign object detection (Q-FOD) operation 631 in the power transfer phase 630, and may then stop the Tx transmission 632. In an embodiment, the power transmission device 201 may identify a power loss state based on power information (a received power packet (RPP) and a signal strength packet (SSP)) received from the external object 101, and may determine to stop Tx transmission 622 depending on whether the foreign object is identified. Here, the external object 101 may be a wireless reception device capable of receiving power, and may operate in a base power profile (BPP).

Referring to FIG. 6B, the wireless power transmission device 201 according to an embodiment may identify that both the foreign object (FO) and the external object 101 are placed (e.g., attached) on the edge of the charging area in a t2 period 609, and may perform the first ping operation (Q ping operation) to identify movement of the external object 101 and to identify whether the foreign object (FO) exists. While performing the second ping operation (e.g., outputting the D ping signal 603 in the t3 and t4 periods of FIG. 6B), the external object 101 (e.g., the wireless power reception device 101) may be identified as being placed on the charging area. In the t3 period and/or the t4 period, the wireless power transmission device 201 may receive a response signal (e.g., an SSP). The wireless power transmission device 201 may perform a Q factor foreign object detection (Q-FOD) operation 621 in the negotiation phase as the foreign object (FO) and the external object 101 are attached together, perform power loss foreign object detection (power loss FOD) operation 633 in the power transfer phase 630, and stop the Tx transmission 634 in the power transfer phase 630. In an embodiment, the power transmission device 201 may identify a power loss state based on power information (a received power packet (RPP) and a signal strength packet (SSP)) received from the external object 101, and may determine to stop Tx transmission 622 depending on whether the foreign object is identified. Here, the external object 101 may be a wireless reception device capable of receiving power, and may operate in both the extended power profile (EPP) and base power profile (BPP).

According to an embodiment, a method of operating a wireless power transmission device (e.g., the wireless power transmission device 201 of FIGS. 2 and 3) may include applying first power to a transmission coil 213 of the wireless power transmission device by a power supply circuit of the wireless power transmission device in a first ping operation.

According to an embodiment, the method may include detecting first information related to the first ping operation while performing the first ping operation and storing the first information in a memory.

According to an embodiment, the method may include identifying an external object placed on a charging area 203 of a housing of the wireless power transmission device based on the first information and reference information.

According to an embodiment, the method may include detecting second information related to the first ping operation by re-performing the first ping operation and identifying a movement of the external object based on a difference the first information and the second information.

According to an embodiment, the method may include applying second power for communication with the object to the transmission coil by the power supply circuit in a second ping operation.

According to an embodiment, the method may include performing a foreign object detection (FOD) and transmitting power for wireless charging to the external object based on identifying that a response from the object is received while performing the second ping operation.

According to an embodiment, the method may further include re-performing the first ping operation based on identifying that a response from the external object is not received while performing the second ping operation.

According to an embodiment, information related to the first ping operation may include at least one of a Q factor of the first ping operation or a resonant frequency of the first ping operation.

According to an embodiment, detecting information related to the first ping operation may include detecting the resonant frequency based on a voltage detected at the transmission coil corresponding to the first power while performing the first ping operation.

According to an embodiment, identifying the external object may include identifying that the external object is placed on a charging area based on a difference between the Q factor and the reference factor included in the reference information and/or a difference between the resonant frequency and a reference frequency.

According to an embodiment, identifying the external object may include identifying that the external object is placed on the charging area based on the reference factor being greater than the Q factor and the resonant frequency differing from the reference frequency.

According to an embodiment, the reference factor is a Q factor, which is detected while performing the first ping operation in a state in which the external object is not placed on the charging area, and may be previously stored in the memory of the wireless power transmission device.

According to an embodiment, the reference frequency is a frequency, which is detected while performing the first ping operation in a state in which the external object is not placed on the charging area, and may be previously stored in the memory.

According to an embodiment, the method may further include identifying that the external object is not placed on the charging area and re-performing the first ping operation base on the reference factor being not greater than the Q factor and the resonant frequency corresponding to the reference frequency.

According to an embodiment, the method may further include identifying that the external object does not move and determining whether a foreign object exists on the charging area base on identifying that a currently detected Q factor is not changed by comparing a previously detected Q factor with the currently detected Q factor.

According to an embodiment, the method may further include determining whether a foreign object exists on the charging area based on identifying that the external object does not move after re-performing the first ping operation.

According to an embodiment, transmitting power for wireless charging to the external object may include identifying that the external object is a wireless power reception device base on receiving the response from the external object and applying a third power for wireless charging of the wireless power reception device to the transmission coil by the power supply circuit.

According to an embodiment, in a non-transitory storage medium storing a program, the program, when executed by a processor of a wireless power transmission device, may include an instruction causes the wireless power transmission device to execute applying first power to a transmission coil 213 of the wireless power transmission device by a power supply circuit of the wireless power transmission device in a first ping operation, detecting first information related to the first ping operation while performing the first ping operation and storing the first information in a memory, identifying an external object placed on a charging area 203 of a housing of the wireless power transmission device based on the first information and reference information, detecting second information related to the first ping operation by re-performing the first ping operation and identifying a movement of the external object based on a difference the first information and the second information, applying second power for communication with the object to the transmission coil by the power supply circuit in a second ping operation, and performing a foreign object detection (FOD) and transmitting power for wireless charging to the external object based on identifying that a response from the object is received while performing the second ping operation.

In the disclosure, when a wireless power reception device capable of wireless charging is lifted out of the central region of a charging area, the wireless power transmission device may prevent a false detection of a foreign object by misidentifying a foreign object included in the wireless power reception device, may clearly detect a foreign object (e.g., a metal foreign object) through an operation method of the wireless power transmission device, and may prevent a problem of temperature rise caused by the foreign object. In addition to the above, various effects that may be directly or indirectly identified through the disclosure may be provided. The effects that may be obtained from the disclosure are not limited to those mentioned above, and other effects not mentioned may be clearly understood by those skilled in the art from the following description.

In addition, the embodiments disclosed herein are provided for the purpose of describing and understanding the technical contents, and are not intended to limit the scope of the technology described herein. Therefore, the scope of the disclosure should be construed as including all changes or various other embodiments based on the technical idea of the disclosure.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wireless power transmission device (201) comprising:
a transmission coil (213);
power supply circuitry;
memory; and
a controller (215) electrically connected to the transmission coil, the power supply circuitry and the memory;
wherein the controller is configured to:
control the power supply circuitry to apply a first power to the transmission coil in a first ping operation;
detect first information related to the first ping operation while performing the first ping operation and store the first information in the memory;
based on the first information and reference information, identify an external object placed on a charging area (203) of a housing of the wireless power transmission device;
detect second information related to the first ping operation by re-performing the first ping operation, and identify a movement of the external object based on a difference the first information and the second information;
control the power supply circuitry to apply a second power for communication with the external object to the transmission coil in a second ping operation; and
based on identifying that a response from the external object is received while performing the second ping operation, perform an operation for a foreign object detection, FOD, and/or an operation of transmitting power for wireless charging to the external object.

2. The wireless power transmission device of claim 1, wherein the controller is configured to:
based on identifying that a response from the external object is not received while performing the second ping operation, re-perform the first ping operation.

3. The wireless power transmission device of claim 1 or claim 2,
wherein the information related to the first ping operation includes at least one of a Q factor of the first ping operation or a resonant frequency of the first ping operation,
wherein the controller is configured to:
based on a voltage detected at the transmission coil corresponding to the first power while performing the first ping operation, detect the resonant frequency;
based on a difference between the Q factor and the reference factor included in the reference information and/or a difference between the resonant frequency and a reference frequency, identify that the external object is placed on a charging area;
based on the reference factor being greater than the Q factor and the resonant frequency differing from the reference frequency, identify that the external object is placed on the charging area; and
base on the reference factor being not greater than the Q factor and the resonant frequency corresponding to the reference frequency, identify that the external object is not placed on the charging area, and re-perform the first ping operation, wherein the reference factor is a Q factor, which is detected while performing the first ping operation in a state in which the external object is not placed on the charging area, and is previously stored in the memory of the wireless power transmission device, and
wherein the reference frequency is a resonant frequency, which is detected while performing the first ping operation in a state in which the external object is not placed on the charging area, and is previously stored in the memory.

4. The wireless power transmission device of any one of claim 1 to claim 3, wherein the controller is configured to:
base on identifying that a currently detected Q factor is not changed by comparing a previously detected Q factor with the currently detected Q factor, identify that the external object does not move and perform the operation to determine whether the foreign object exists on the charging area; and
based on identifying that the external object does not move after re-performing the first ping operation, perform the operation to determine whether the foreign object exists on the charging area and perform the second ping operation.

5. The wireless power transmission device of any one of claim 1 to claim 4, wherein the controller is configured to:
base on receiving the response from the external object, identify that the external object is a wireless power receiver; and
control the power supply circuitry to apply a third power for wireless charging of the wireless power receiver to the transmission coil.

6. A method of operating a wireless power transmission device (201) comprising:
applying first power to a transmission coil (213) of the wireless power transmission device by a power supply circuit of the wireless power transmission device in a first ping operation;
detecting first information related to the first ping operation while performing the first ping operation and storing the first information in a memory;
based on the first information and reference information, identifying an external object placed on a charging area (203) of a housing of the wireless power transmission device;
detecting second information related to the first ping operation by re-performing the first ping operation and identifying a movement of the external object based on a difference the first information and the second information;
applying second power for communication with the object to the transmission coil by the power supply circuit in a second ping operation; and
based on identifying that a response from the object is received while performing the second ping operation, performing a foreign object detection (FOD) and transmitting power for wireless charging to the external object.

7. The method of claim 6, further comprising re-performing the first ping operation based on identifying that a response from the external object is not received while performing the second ping operation.

8. The method of claim 6 or claim 7,
wherein the information related to the first ping operation includes at least one of a Q factor of the first ping operation or a resonant frequency of the first ping operation,
wherein the detecting of the information related to the first ping operation comprises detecting the resonant frequency based on a voltage detected at the transmission coil corresponding to the first power while performing the first ping operation, and
wherein the identifying of the external object comprises identifying that the external object is placed on a charging area based on a difference between the Q factor and the reference factor included in the reference information and/or a difference between the resonant frequency and a reference frequency.

9. The method of any one of claim 6 to claim 8,
wherein the identifying of the external object comprises identifying that the external object is placed on the charging area based on the reference factor being greater than the Q factor and the resonant frequency differing from the reference frequency,
wherein the reference factor is a Q factor, which is detected while performing the first ping operation in a state in which the external object is not placed on the charging area, and is previously stored in the memory of the wireless power transmission device, and
wherein the reference frequency is a frequency, which is detected while performing the first ping operation in a state in which the external object is not placed on the charging area, and is previously stored in the memory.

10. The method of any one of claim 6 to claim 9, further comprising identifying that the external object is not placed on the charging area and re-performing the first ping operation base on the reference factor being not greater than the Q factor and the resonant frequency corresponding to the reference frequency.

11. The method of any one of claim 6 to claim 10, further comprising identifying that the external object does not move and determining whether a foreign object exists on the charging area base on identifying that a currently detected Q factor is not changed by comparing a previously detected Q factor with the currently detected Q factor.

12. The method of any one of claim 6 to claim 11, further comprising determining whether a foreign object exists on the charging area based on identifying that the external object does not move after re-performing the first ping operation.

13. The method of any one of claim 6 to claim 12,
wherein the transmitting of the power for wireless charging to the external object comprises:
identifying that the external object is a wireless power reception device base on receiving the response from the external object; and
applying a third power for wireless charging of the wireless power reception device to the transmission coil by the power supply circuit.

14. A non-transitory storage medium storing a program, wherein the program, when executed by at least one processor (215) of a wireless power transmission device (201), comprises an instruction causes the wireless power transmission device to execute:
applying first power to a transmission coil (213) of the wireless power transmission device by a power supply circuit of the wireless power transmission device in a first ping operation;
detecting first information related to the first ping operation while performing the first ping operation and storing the first information in a memory;
based on the first information and reference information, identifying an external object placed on a charging area (203) of a housing of the wireless power transmission device;
detecting second information related to the first ping operation by re-performing the first ping operation and identifying a movement of the external object based on a difference the first information and the second information;
applying second power for communication with the object to the transmission coil by the power supply circuit in a second ping operation; and
based on identifying that a response from the object is received while performing the second ping operation, performing a foreign object detection (FOD) and transmitting power for wireless charging to the external object.

15. The non-transitory storage medium of claim 14, wherein the program, when executed by the processor of a wireless power transmission device, comprises an instruction causes the wireless power transmission device to further execute re-performing the first ping operation based on identifying that a response from the external object is not received while performing the second ping operation.
